# EUROPEAN PATENT APPLICATION

(11) **EP 3 972 244 A1**
(43) Date of publication of application: **23.03.2022**
(21) Application number: 20196825.2
(22) Date of filing: 18.09.2020
(51) Int. Cl.: H04N 13/161, H04N 13/194, H04N 19/597, H04N 13/178, H04N 13/239, H04N 13/243, H04N 13/25, H04N 13/271, H04N 21/40, H04N 13/257, H04N 13/00

(54) **SYSTEM AND METHOD FOR PROCESSING IMAGE RELATED TO DEPTH**

(71) Applicant: XRSpace CO., LTD., Taoyuan City 330 (TW)
(72) Inventor: HUANG, Ching-Ning, 111 Taipei City (TW); HSU, Cheng-Yu, 231 New Taipei City (TW); HSIEH, Yi-Kang, 310 Zhudong Township, Hsinchu County (TW)
(74) Representative: Emde, Eric

(57) **Abstract**

A system (100) and a method for processing images related to depth are provided. In the method, a first image sensor (111, 111-1, 111-2, 111-3) generates a first image (M1, C1, IR1, CIR1). A second image sensor (113, 113-1, 113-2, 113-3) generates a second image (M2, C2, IR2, CIR2). A first image processing circuit (120) generates depth data (D, D1, D2) corresponding to object identified in the first and the second image (M2, C2, IR2, CIR2) and generates a first data packet including two of the first image (M1, C1, IR1, CIR1), the second image (M2, C2, IR2, CIR2), and the depth data (D, D1, D2). A second image processing circuit (130) receives the first data packet and performs stereo matching on the first image (M1, C1, IR1, CIR1) and the second image (M2, C2, IR2, CIR2). Therefore, the efficiency of processing data could be improved.

## Description

### TECHNICAL FIELD

The present disclosure generally relates to an image processing technology, in particular, to a system and a method for processing images related to depth.

### BACKGROUND

Depth information may be used in object detection, three-dimensional objection generation, or other implementations. In the conventional approaches, a specific processor (for example, a digital signal processor (DSP) or a central processing unit (CPU)) may perform the depth calculation based on the images by using software computation to generate the depth information. However, for a compact device (such as a smartphone, a tablet, a handheld mounted display, etc.), it may not have better performance relative to other computing devices (such as a desktop computer, a laptop, or a server), so that the software computation of the compact device may not provide enough efficiency for depth calculation.

### SUMMARY OF THE DISCLOSURE

Accordingly, the present disclosure is directed to a system and a method for processing images related to depth, to provide a specific circuit to handle depth-related calculations with hardware computation.

In one of the exemplary embodiments, a system for processing image related to depth includes, but is not limited to, a first image sensor, a second image sensor, a first image processing circuit, and a second image processing circuit. The first image sensor is used for generating the first image. The second image is used for generating a second image. The first image processing circuit is coupled to the first image sensor and the second image sensor. The first image processing circuit is configured to generate depth data corresponding to one or more objects identified in the first image and the second image and generate a first data packet including two of the first image, the second image, and the depth data. The second image processing circuit is coupled to the first image processing circuit. The second image processing circuit is configured to receive the first data packet and perform stereo matching on the first image and the second image.

In one of the exemplary embodiments, a method for processing images related to depth includes, but is not limited to, the following steps. A first image sensor generates a first image. A second image sensor generates a second image. A first image processing circuit generates depth data corresponding to one or more objects identified in the first and the second image. The first image processing circuit generates a first data packet including two of the first image, the second image, and the depth data. A second image processing circuit receives the first data packet. The second image processing circuit performs stereo matching on the first image and the second image.

In light of the foregoing , according to the system and the method for processing images related to depth, the first image processing circuit can handle the depth calculation to generate the depth data. Furthermore, for interface limitation, merely two data among the first image, the second image, and the depth data may be transmitted to the second image circuit at the same time. Accordingly, the efficiency for depth-related calculations may be improved.

It should be understood, however, that this Summary may not contain all of the aspects and embodiments of the present disclosure, is not meant to be limiting or restrictive in any manner, and that the invention as disclosed herein is and will be understood by those of ordinary skill in the art to encompass obvious improvements and modifications thereto.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a block diagram illustrating a system for processing image related to depth according to one of the exemplary embodiments of the disclosure.
FIG. 2 is a block diagram illustrating a first image processing circuit according to one of the exemplary embodiments of the disclosure.
FIG. 3 is a flowchart illustrating a method for processing image related to depth according to one of the exemplary embodiments of the disclosure.
FIG. 4A is a block diagram illustrating an image process according to one of the exemplary embodiments of the disclosure.
FIG. 4B is a block diagram illustrating an image process according to one of the exemplary embodiments of the disclosure.
FIG. 4C is a block diagram illustrating an image process according to one of the exemplary embodiments of the disclosure.
FIG. 4D is a block diagram illustrating an image process according to one of the exemplary embodiments of the disclosure.
FIG. 5 is a block diagram illustrating a data transmission according to one of the exemplary embodiments of the disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

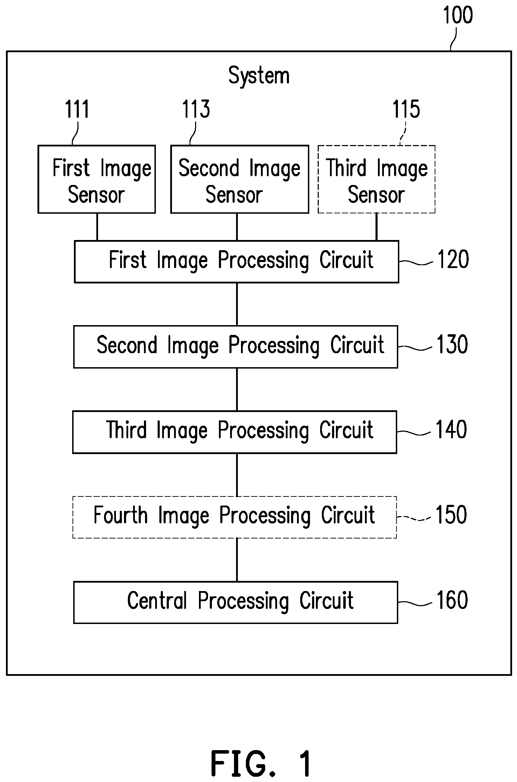

FIG. 1 is a block diagram illustrating a system 100 for processing image related to depth according to one of the exemplary embodiments of the disclosure. Referring to FIG. 1, the system 100 includes, but not limited to, a first image sensor 111, a second image sensor 113, a first image processing circuit 120, a second image processing circuit 130, a third processing circuit 140, a fourth processing circuit 150, and a central processing unit (CPU) 160.

The first image sensor 111 and the second image sensor 113 could be infrared ray (IR) sensors, color image sensors, red-green-blue (RGB) sensors, RGB-IR sensors, or depth cameras. In one embodiment, the first image sensor 111 and the second image sensor 113 correspond to the left and right eyes, respectively.

In one embodiment, the system 100 further includes a third image sensor 115. The third image sensor 115 could be an IR sensor, a color image sensor, an RGB sensor, an RGB-IR sensor, or a depth camera.

It should be noted that for IR sensor and RGB-IR sensor, the system 100 may further includes infrared light source (not shown), so that the IR-related sensors may detect the infrared light.

The first image processing circuit 120 could be an image signal processor (ISP), an image chip, or other image-related processors. The first image processing circuit 120 is coupled to the first image sensor 111, the second image sensor 113, and the third image sensor 115.

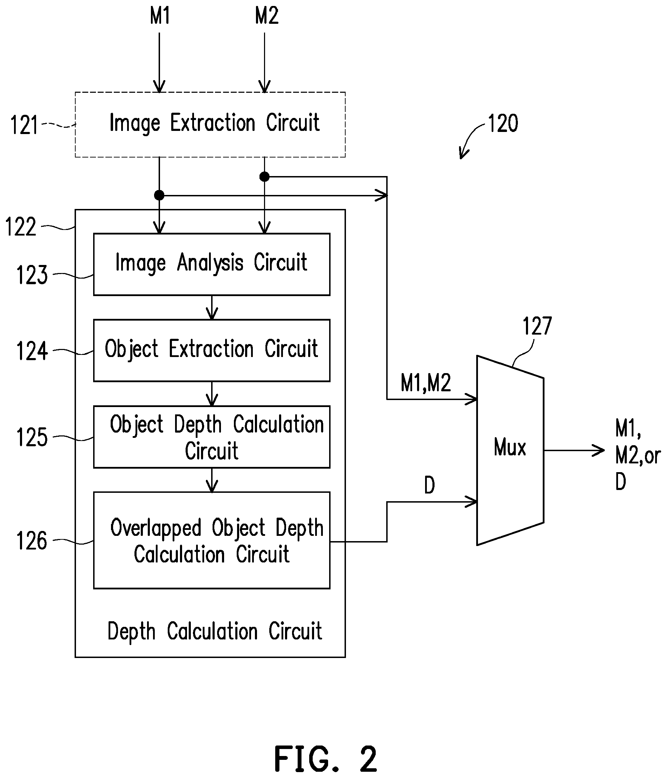

FIG. 2 is a block diagram illustrating the first image processing circuit 120 according to one of the exemplary embodiments of the disclosure. Referring to FIG. 2, the first image processing circuit 120 includes, but is not limited to, an image extraction circuit 121 and a depth calculation circuit 122. In one embodiment, the image extraction circuit 121 is configured to extract the color portion corresponding to red, green, and blue pixels of the images M1 and M2 generated by the first image sensor 111 and the second image sensor 113. Furthermore, the image extraction circuit 121 is configured to extract the infrared portion corresponding to IR pixels of the images M1 generated by the first image sensor 111, the second image sensor 113 M2, and/or the third image sensor 115. It is assumed the first image sensor 111, the second image sensor 113, and/or the third image sensor 115 are RGB-IR sensors. However, in some embodiment, for an IR sensor, a color image sensor, an RGB sensor, or a depth camera, the image extraction circuit 121 may be omitted.

The depth calculation circuit 122 includes, but is not limited to, an image analysis circuit 123, an object extraction circuit 124, an object depth calculation circuit 125, an overlapped object depth calculation circuit 126, and a multiplexer 127.

In one embodiment, the image analysis circuit 123 is configured to determine whether to adjust pixel values of the images M1 and M2 generated by the first image sensor 111 and the second image sensor 113 to enhance picture quality. For example, when the raw images are too dark, the image analysis circuit 123 may increase exposure values of the raw images to improve picture quality for the following object extraction operation. In some embodiments, the pixel values may be related to chroma, contract, or other image-related parameters.

The object extraction circuit 124 is coupled to the image analysis circuit 123. In one embodiment, the object extraction circuit 124 is configured to identify one or more objects in the real world from the raw images generated by the first image sensor 111 and the second image sensor 113. For example, the object extraction circuit 124 extract features from the raw images and compare the features with predefined objects' features.

The object depth calculation circuit 125 is coupled to the object extraction circuit 124. In one embodiment, the object depth calculation circuit 125 is configured to calculate a first depth of the one or more objects according to a distance between the first and second image sensors 111 and 113 and a pixel distance between where the one or more objects are located in both raw images of the first and second image sensors 111 and 113 by using the triangulation method.

The overlapped object depth calculation circuit 126 is coupled to the object depth calculation circuit 125. In one embodiment, the overlapped object depth calculation circuit 126 is configured to calculate the second depth of two overlapped objects of the one or more objects and output the depth data D including the first depth and the second depth.

In some embodiments, the depth calculation is performed by hardware computation, so that the first image processing circuit 120 could be considered as a depth hardware engine.

The multiplexer 127 is coupled to the overlapped object depth calculation circuit 126. In one embodiment, the multiplexer 127 is configured to output one of the raw images M1 and M2 generated by the first image sensor 111 and the second image sensor 113, and the depth data D according to a control signal. The control signal may be generated based on the requirement of the second image processing circuit 130 or other circuits, and the embodiment is not limited thereto.

The second image processing circuit 130 could be a vision processing unit (VPU), an artificial intelligence (AI) accelerator for vision task, or other image-related processors. The second image processing circuit 130 is coupled to the first image processing circuit 120. In one embodiment, the second image processing circuit 130 is configured to perform stereo matching on the images. The stereo matching process is used to extract depth information or three-dimensional information from the digital image. For example, the second image processing circuit 130 may compare two images M1 and M2 from the first image sensor 111 and the second image sensor 113, and the depth information or three-dimensional information could be obtained based on the disparity. In another example, the second image processing circuit 130 is configured to determines one or more extracted objects with a specific figure or pattern (e.g., a hand gesture) according to the images M1 and M2 from the first image sensor 111 and the second image sensor 113.

The third image processing circuit 140 could be an ISP, an image chip, or other image-related processors. The third image processing circuit 140 is coupled to the second image processing circuit 130. In one embodiment, the third image processing circuit 140 is configured to perform automatic white balance and exposure value calibrations to the images outputted from the second image processing circuit 130 to improve picture quality for object recognition and depth calculation. In some embodiments, the third image processing circuit 140 may calibrate chroma, contract, or other image-related parameters. In still some embodiments, two or more of the first, second, and third image processing circuits 120, 130, and 140 may be integrated into a single chip or a digital circuit.

The fourth image processing circuit 150 could be a digital signal processor (DSP), an image chip, or other image-related processors. The fourth image processing circuit 150 is coupled to the third image processing circuit 140. In one embodiment, the fourth image processing circuit 150 is configured to stereography conversion on the image outputted from the second or third image processing circuit 130 or 140 according to the depth data generated by the first image processing circuit 120, to generate a stereography. For example, the stereography includes the three-dimensional object(s) projected onto a two-dimensional surface. In some embodiments, the fourth image processing circuit 150 may be omitted.

The CPU 160 could be a microprocessor, a microcontroller, a graphics processing unit (GPU), an application-specific integrated circuit (ASIC), or a field-programmable gate array (FPGA). The functions of the CPU 160 may also be implemented by an independent electronic device or an integrated circuit (IC), and operations of the CPU 160 may also be implemented by software. The CPU 160 is coupled to the third image processing circuit 140 or the fourth image processing circuit 150. In one embodiment, the CPU 160 is configured to generate a computation result regarding applications for hand motion detection and tracking, space scanning, object scanning, augmented reality (AR) see-through, 6 degrees of freedom (DoF), and Simultaneous Localization and Mapping (SLAM) based on the images outputted from the first, second, third and/or fourth image processing circuit 120, 130, 140, 150 and/or the corresponding depth data.

The system 100 may include one or more memory (not shown) to store data used in or outputted from the first, second, third, or fourth image processing circuit 120, 130, 140, 150, or the CPU 160.

To better understand the operating process provided in one or more embodiments of the disclosure, several embodiments will be exemplified below to elaborate the operating process of the system 100. The devices and modules in the system 100 are applied in the following embodiments to explain the method for processing images related to depth provided herein. Each step of the method can be adjusted according to actual implementation situations and should not be limited to what is described herein.

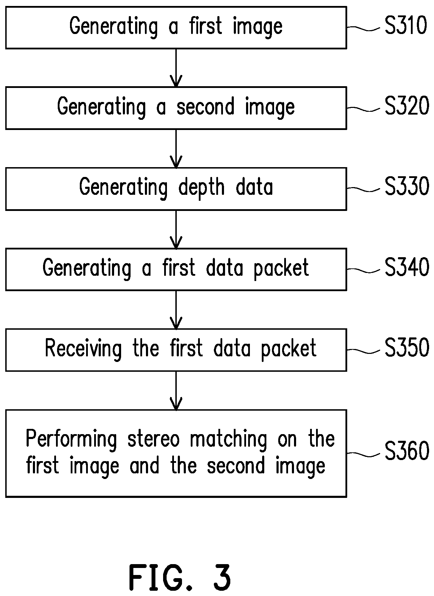

FIG. 3 is a flowchart illustrating a method for processing images related to depth according to one of the exemplary embodiments of the disclosure. Referring to FIG. 3, the first image sensor 111 may generate a first image (step S310). Regarding the type of the first image sensor 111, the first image could be an IR image, a color image, or a color infrared image. Furthermore, the second image sensor 113 may generate a second image (step S320). Regarding the type of the second image sensor 130, the second image also could be an IR image, a color image, or a color infrared image. In one embodiment, the first and second image sensors 111 and 113 are displaced horizontally to obtain two differing views on a scene based on human binocular vision.

In one embodiment, the third image sensor 115 may generate the third image. In some embodiments, the first image is an infrared image, the second image is another infrared image, the third image is a color image. In still some embodiments, the first image is a color image, the second image is another color image, the third image is an infrared image.

The first image processing circuit 120 may generate the depth data corresponding to one or more objects identified in the first image and the second image (step S330). As mentioned in the operation of the depth calculation circuit 122, the first depth of the one or more non-overlapped objects and/or the second depth of the one or more overlapped objects identified in the first image and the second image are generated to form the depth data. In some embodiments, the depth calculation circuit 122 may generate the depth data corresponding to the one or more objects identified in the first image, the second image, and the third image.

The first image processing circuit 120 may generate a first data packet including two of the first image, the second image, and the depth data (step S340). In one embodiment, two data among the first image, the second image, and the depth data are combined to generate the first data packet. The format of the data packet is defined based on the transmission interface of the image processing circuit 120. In another embodiment, two data among the first image, the second image, the depth data, and dummy data are combined to generate the first data packet. The dummy data may include specific values or random values.

In still another embodiment, the first image processing circuit 120 may generate a second data packet including the other two of the first image, the second image, the depth data, and the dummy data different from the first data packet.

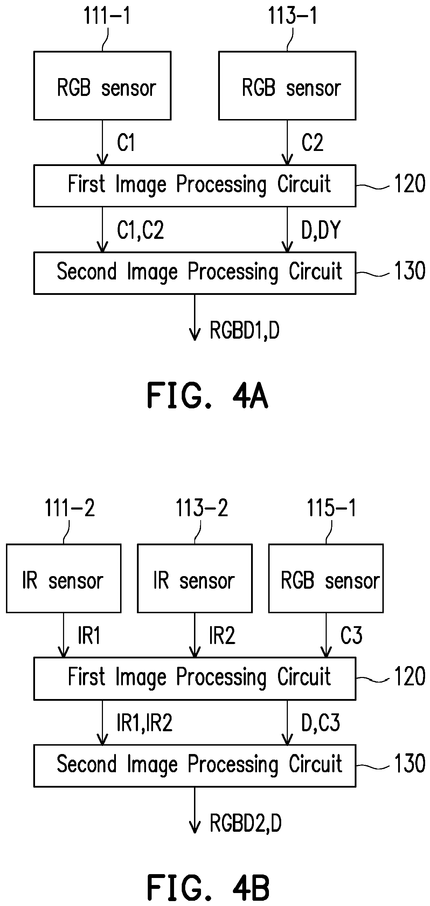

For example, FIG. 4A is a block diagram illustrating an image process according to one of the exemplary embodiments of the disclosure. Referring to FIG. 4A, the first image sensor 111 is the RGB sensor 111-1, and the second image sensor 113 is the RGB sensor 113-1. The RGB sensor 111-1 generates a color image C1, and the RGB sensor 113-1 generates another color image C2 at the same timepoint. Then, the first image processing circuit 120 generates the depth data D based on the object in both color images C1 and C2. Furthermore, the first image processing circuit 120 combines the color images C1 and C2 into the first data packet and combines the depth data D and the dummy data DY into the second data packet. The data structure could be:

**Table (1)**

| | | |
|---|---|---|
| First data packet | C1 | C2 |
| Second data packet | D | DY |

FIG. 4B is a block diagram illustrating an image process according to one of the exemplary embodiments of the disclosure. Referring to FIG. 4B, the first image sensor 111 is the IR sensor 111-2, the second image sensor 113 is the IR sensor 113-2, and the third image sensor 115 is the RGB sensor 115-1. The IR sensor 111-2 generates an infrared image IR1, the IR sensor 113-2 generates another infrared image IR2, and the RGB sensor 115-1 generates a color image C3 at the same timepoint. Then, the first image processing circuit 120 generates the depth data D based on the object identified in all of the infrared images IR1 and IR2 and the color image C3. Furthermore, the first image processing circuit 120 combines the infrared images IR1 and IR2 into the first data packet and combines the depth data D and the color image C3 into the second data packet. The data structure could be:

**Table (2)**

| | | |
|---|---|---|
| First data packet | IR1 | IR2 |
| Second data packet | C3 | DY |

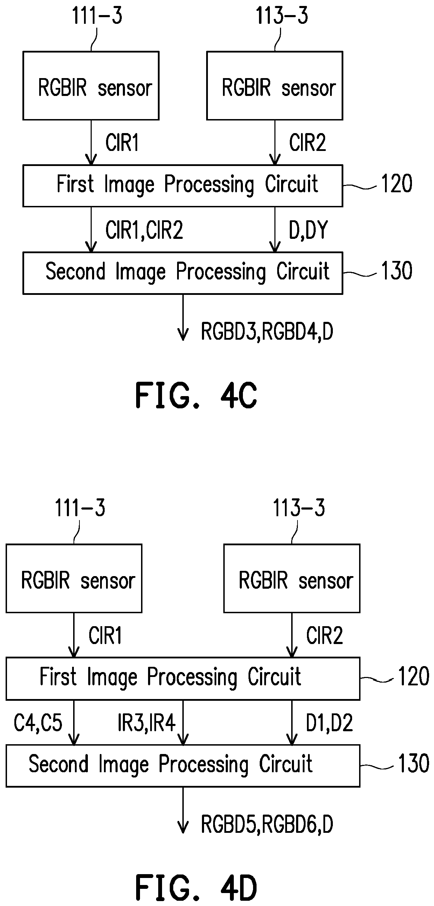

FIG. 4C is a block diagram illustrating an image process according to one of the exemplary embodiments of the disclosure. Referring to FIG. 4C, the first image sensor 111 is the RGB-IR sensor 111-3, and the second image sensor 113 is the RGB-IR sensor 113-3. The RGB-IR sensor 111-3 generates a color infrared image CIR1, and the RGB-IR sensor 113-3 generates another color infrared image CIR2 at the same timepoint. Then, the first image processing circuit 120 generates the depth data D based on the object in both color infrared images CIR1 and CIR2. Furthermore, the first image processing circuit 120 combines the color infrared images CIR1 and CIR2 into the first data packet and combines the depth data D and the dummy data DY into the second data packet. The data structure could be:

**Table (3)**

| | | |
|---|---|---|
| First data packet | CIR1 | CIR2 |
| Second data packet | D | DY |

In one embodiment, the first image of the first image sensor 111 is a first color infrared image, the second image of the second image sensor 113 is a second color infrared image. For example, FIG. 4D is a block diagram illustrating an image process according to one of the exemplary embodiments of the disclosure. Referring to FIG. 4D, the first image sensor 111 is the RGB-IR sensor 111-3, and the second image sensor 113 is the RGB-IR sensor 113-3. The image extraction circuit 121 extracts the color portion C4 and C5 corresponding to red, green, and blue pixels of the first and second color infrared images CIR1 and CIR2 generated by the first image sensor 111 and the second image sensor 113 and extracts the infrared portions IR3 and IR4 corresponding to IR pixels of the first and second color infrared images CIR1 and CIR2 generated by the first image sensor 111 and the second image sensor 113, where the image pixels of the infrared portion are defined according to greyscale values. The depth calculation circuit 122 may generate first depth data D1 corresponding to the one or more objects identified in color portions C4 and C5 of the first color infrared image and the second color infrared image CIR1 and CIR2 and generate second depth data D2 corresponding to the one or more objects identified in infrared portions IR3 and IR4 of the first color infrared image and the second color infrared image CIR1 and CIR2, where the depth data D include the first and second depth data D1 and D2.

Furthermore, the first image processing circuit 120 may generate the first data packet including two of the color portions C4 and C5 of the first color infrared image CIR1 and the second color infrared image CIR2, the infrared portions IR3 and IR4 of the first color infrared image CIR1 and the second color infrared image CIR2, the first depth data D1, and the second depth data D2, generate a third data packet including another two of the color portions C4 and C5, the infrared portions IR3 and IR4, the first depth data D1, and the second depth data D2 different from the first data packet, and generate a fourth data packet including the other two of the color portions C4 and C5, the infrared portions IR3 and IR4, the first depth data D1, and the second depth data D2 different from the first data packet and the third data packet.

For example, the first image processing circuit 120 combines the color portions C4 and C5 of the first color infrared image CIR1 and the second color infrared image CIR2 in the first data packet, combines the infrared portions IR3 and IR4 of the first color infrared image CIR1 and the second color infrared image CIR2 into the third data packet, and combines the first depth data D1 and the second depth data D2 into the fourth data packet. The data structure could be:

**Table (4)**

| | | |
|---|---|---|
| First data packet | C4 | C5 |
| Second data packet | IR3 | IR4 |
| Third data packet | D1 | D2 |

The second image processing circuit 130 may receive the first data packet from the first image processing circuit 120 (step S350). Specifically, the first image processing circuit 120 provides a first transmission interface, and the second image processing circuit 130 provides a second transmission interface connected with the first transmission interface. The first and second transmission interfaces could be camera serial interface (CSI)-3, CSI-2, another mobile industry processor interface (MIPI), or other transmission interfaces. The first and second transmission interfaces provide multiple data lines to transmit data.

In one embodiment, the first transmission interface transmits the first data packet to the second transmission interface over a first channel, and the first data packet further includes a first channel identifier merely corresponding to the first channel. The first channel is a logical channel that is identified by the firmware or software of the first and second transmission interfaces. However, the first data packet is still transmitted over the physical data lines.

In another embodiment, the first transmission interface transmits the second data packet to the second transmission interface over a second channel different from the first channel, and the second data packet further comprises a second channel identifier merely corresponding to the second channel. The first channel and the second channel correspond to different memory blocks in the second transmission interface. The second transmission interface may identify the channel identifier to know which channel the data packet belongs to. For example, the first channel identifier is '00', and the second channel identifier is '01'. Then, the second image processing circuit 130 may store the data packet to a corresponding memory block.

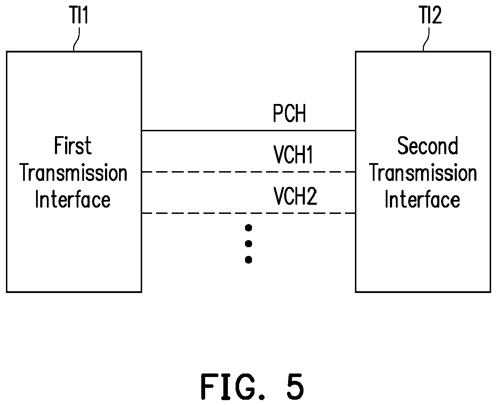

In some embodiments, the first channel is a physical channel/way, and the second channel is a virtual channel/way. It is assumed the transmission interfaces provide multiple logical channels via the data lines between two transmission interfaces. If there are two or more types of data packets, the first transmission interface may arrange different data packets to different logical channels. There may be merely one logical channel called as the physical channel, and the other logical channels would be called as the virtual channel. FIG. 5 is a block diagram illustrating a data transmission according to one of the exemplary embodiments of the disclosure. Referring to FIG. 5, there are multiple channels between the first transmission interface TI1 and the second transmission interface TI2, such as the physical channel PCH and the virtual channels VCH1 and VCH2.

Taking FIG. 4A as an example, the first data packet including the color images C1 and C2 is transmitted over the physical channel PCH, and the second data packet including the dummy data DY and the depth data D is transmitted over the virtual channel VCH1.

In another embodiment, there are three different data packets, which are the first, third, and fourth data packets as mentioned before. The first transmission interface may transmit the first data packet to the second transmission interface over a third channel, transmit the third data packet to the second transmission interface over a fourth channel, and transmit the fourth data packet to the second transmission interface over a fifth channel. The first data packet further includes a third channel identifier merely corresponding to the third channel, the third data packet further includes a fourth channel identifier merely corresponding to the fourth channel, and the fourth data packet further includes a fifth channel identifier merely corresponding to the fifth channel. For example, the third channel identifier is '01', the fourth channel identifier is '10', and the fifth channel identifier is '11'. Similarly, the third, fourth, and fifth channels correspond to different memory blocks in the second transmission interface. Then, the second image processing circuit 130 may retrieve desired data from a corresponding memory block.

In some embodiments, the third channel is a physical channel, the fourth channel is a virtual channel, and the fifth channel is another virtual channel. Taking FIG. 4D and FIG. 5 as an example, the first data packet including the color portions C4 and C5 is transmitted over the physical channel PCH, the third data packet including the infrared portions IR3 and IR4 is transmitted over the virtual channel VCH1, and the fourth data packet including the first depth data D1 and the second depth data D2 is transmitted over another virtual channel VCH2.

It should be noted that the data in the same data packet may be provided to a specific application. Taking FIG. 4D as an example, the first data packet including the color portions C4 and C5 is known as RGB side by side to be applied to AR see-through application, and the third data packet including the infrared portions IR3 and IR4 is known as IR side by side to be applied to SLAM, hand motion detection and tracking, and 6 Dof applications. Therefore, the efficiency of processing data may be improved.

The second image processing circuit 130 may perform stereo matching on the first image and the second image (step S360). Specifically, the second image processing circuit 130 may combine the first image, the second image, and the depth data based on the stereo matching algorithm, to generate a matching image related to the depth data. Taking FIG. 4A as an example, the second image processing circuit 130 performs stereo matching to the color images C1 and C2 to generate a color matching image RGBD1, where image pixels of the color matching image RGBD1 are defined by red, green, and blue pixels.

Taking FIG. 4B as an example, the second image processing circuit 130 performs stereo matching to the infrared images IR1 and IR2 to generate a greyscale matching image and perform color matching to the greyscale matching image and the color image C3 to generate a color matching image RGBD2, where image pixels of the color matching image RGBD1 are defined by red, green, blue, and IR/greyscale pixels.

Taking FIG. 4C as an example, the second image processing circuit 130 performs stereo matching to the color infrared images CIR1 and CIR2 to generate color matching images RGBD3 and RGBD4 based on the view angles of the first image sensor 111 and the second image sensor 113, respectively.

Taking FIG. 4D as an example, the second image processing circuit 130 performs stereo matching to the infrared portions IR3 and IR4 to generate a greyscale matching image and perform color matching to the greyscale matching image and the color images C3 and C4 to generate color matching image RGBD5 and RGBD6.

In one embodiment, the fourth image processing circuit 150 may convert the color matching image into a stereography according to the depth data.

In another embodiment, the CPU 160 may generate a computation result regarding applications for hand motion detection and tracking, space scanning, object scanning, AR see-through, 6 Dof, and SLAM based on the stereography and the corresponding depth data.

Under the architecture of the system 100, the present disclosure firstly calculates the depth data corresponding to the images M1 and M2 using the first image processing circuit 120 (i.e., the depth hardware engine), so as to replace the software calculations of a digital signal processor in the prior art. Afterward, with the operations of the second image processing circuit 130 and the third image processing circuit 140, the images M1 and M2 with better picture quality and the corresponding depth data with higher accuracy may be obtained. Therefore, the accuracy and efficiency of the CPU 160 for handling applications (such as hand motion detection and tracking, space scanning, object scanning, AR see-through, and SLAM) may be improved.

In summary , the exemplary embodiments described above depicted the method and the system for processing images related to depth. The embodiment firstly calculates the depth data corresponding to the raw images of image sensors using the image processing circuit, so as to replace the software calculations of a digital signal processor in the prior art. Furthermore, the images with better picture quality and the corresponding depth data with higher accuracy may be obtained. Accordingly, the accuracy and efficiency of the CPU for handling one or more applications may be improved to reach a better user experience.

## Claims

1. A system (100) for processing image related to depth, **characterized by** comprising:
a first image sensor (111, 111-1, 111-2, 111-3), generating a first image (M1, C1, IR1, CIR1);
a second image sensor (113, 113-1, 113-2, 113-3), generating a second image (M2, C2, IR2, CIR2);
a first image processing circuit (120), coupled to the first image sensor (111, 111-1, 111-2, 111-3) and the second image sensor (113, 113-1, 113-2, 113-3), and configured to:
generate depth data (D, D1, D2) corresponding to at least one object identified in the first image (M1, C1, IR1, CIR1) and the second image (M2, C2, IR2, CIR2); and
generate a first data packet comprising two of the first image (M1, C1, IR1, CIR1), the second image (M2, C2, IR2, CIR2), and the depth data (D, D1, D2); and
a second image processing circuit (130), coupled to the first image processing circuit (120), and configured to:
receive the first data packet; and
perform stereo matching on the first image (M1, C1, IR1, CIR1) and the second image (M2, C2, IR2, CIR2).

2. A method for processing image related to depth, **characterized by** comprising:
generating, by a first image sensor (111, 111-1, 111-2, 111-3), a first image (M1, C1, IR1, CIR1);
generating, by a second image sensor (113, 113-1, 113-2, 113-3), a second image (M2, C2, IR2, CIR2);
generating, by a first image processing circuit (120), depth data (D, D1, D2) corresponding to at least one object identified in the first image (M1, C1, IR1, CIR1) and the second image (M2, C2, IR2, CIR2);
generating, by the first image processing circuit (120), a first data packet comprising two of the first image (M1, C1, IR1, CIR1), the second image (M2, C2, IR2, CIR2), and the depth data (D, D1, D2);
receiving, by a second image processing circuit (130), the first data packet; and
performing, by the second image processing circuit (130), stereo matching on the first image (M1, C1, IR1, CIR1) and the second image (M2, C2, IR2, CIR2).

3. The system (100) of claim 1, **characterized in that**
the first image processing circuit (120) further provides a first transmission interface (TI1), and
the second image processing circuit (130) further provides a second transmission interface (TI2) connected with the first transmission interface (TI1), wherein
the first transmission interface (TI1) transmits the first data packet to the second transmission interface (TI2) over a first channel, and the first data packet further comprises a first channel identifier merely corresponding to the first channel, or the method of claim 2, **characterized in that** the step of receiving the first data packet comprises:
providing, by the first image processing circuit (120), a first transmission interface (TI1);
providing, by the second image processing circuit (130), a second transmission interface (TI2) connected with the first transmission interface (TI1);
transmitting, by the first transmission interface (TI1), the first data packet to the second transmission interface (TI2) over a first channel, wherein the first data packet further comprises a first channel identifier merely corresponding to the first channel.

4. The system (100) of claim 3, **characterized in that** the first image processing circuit (120) is further configured to:
generate a second data packet comprising the other two of the first image (M1, C1, IR1, CIR1), the second image (M2, C2, IR2, CIR2), the depth data (D, D1, D2), and dummy data different from the first data packet, the first transmission interface (TI1) transmits the second data packet to the second transmission interface (TI2) over a second channel, and the second data packet further comprises a second channel identifier merely corresponding to the second channel, or the method of claim 3, **characterized by** further comprising:
generating, by the first image processing circuit (120), a second data packet comprising the other two of the first image (M1, C1, IR1, CIR1), the second image (M2, C2, IR2, CIR2), the depth data (D, D1, D2), and dummy data different from the first data packet; and
transmitting, by the first transmission interface (TI1), the second data packet to the second transmission interface (TI2) over a second channel, wherein the second data packet further comprises a second channel identifier merely corresponding to the second channel.

5. The system (100) of claim 4 or the method of claim 4, **characterized in that** the first channel is a physical channel (PCH), the second channel is a virtual channel (VCH1, VCH2), and the first channel and the second channel correspond to different memory blocks in the second transmission interface (TI2).

6. The system (100) of claim 1, **characterized in that** the second image processing circuit (130) is further configured to:
combine the first image (M1, C1, IR1, CIR1), the second image (M2, C2, IR2, CIR2), and the depth data (D, D1, D2), to generate a matching image related to the depth data (D, D1, D2), or the method of claim 2, **characterized in that** the step of performing stereo matching comprises:
combining the first image (M1, C1, IR1, CIR1), the second image (M2, C2, IR2, CIR2), and the depth data (D, D1, D2), to generate a matching image related to the depth data (D, D1, D2).

7. The system (100) of claim 1, **characterized in that** the first image (M1, CIR1) is a first color infrared image, the second image (M2, CIR2) is a second color infrared image, the depth data (D, D1, D2) comprises first depth data (D1) and second depth data (D2), and
the first image processing circuit (120) is further configured to:
generate the first depth data (D1) corresponding to the at least one object identified in color portions of the first color infrared image and the second color infrared image;
generate the second depth data (D2) corresponding to the at least one object identified in infrared portions of the first color infrared image and the second color infrared image;
generate the first data packet comprising two of the color portions of the first color infrared image and the second color infrared image, the infrared portions of the first color infrared image and the second color infrared image, the first depth data (D1), and the second depth data (D2);
generate a third data packet comprising another two of the color portions of the first color infrared image and the second color infrared image, the infrared portions of the first color infrared image and the second color infrared image, the first depth data (D1), and the second depth data (D2) different from the first data packet; and
generate a fourth data packet comprising the other two of the color portions of the first color infrared image and the second color infrared image, the infrared portions of the first color infrared image and the second color infrared image, the first depth data (D1), and the second depth data (D2) different from the first data packet and the third data packet, or the method of claim 2, **characterized in that** the first image (M1, C1, CIR1) is a first color infrared image, the second image (M2, C2, CIR2) is a second color infrared image, the depth data (D, D1, D2) comprises first depth data (D1) and second depth data (D2), and the method further comprises:
generating, by the first image processing circuit (120), the first depth data (D1) corresponding to the at least one object identified in color portions of the first color infrared image and the second color infrared image;
generating, by the first image processing circuit (120), the second depth data (D2) corresponding to the at least one object identified in infrared portions of the first color infrared image and the second color infrared image;
generating, by the first image processing circuit (120), the first data packet comprising two of the color portions of the first color infrared image and the second color infrared image, the infrared portions of the first color infrared image and the second color infrared image, the first depth data (D1), and the second depth data (D2);
generating, by the first image processing circuit (120), a third data packet comprising another two of the color portions of the first color infrared image and the second color infrared image, the infrared portions of the first color infrared image and the second color infrared image, the first depth data (D1), and the second depth data (D2) different from the first data packet; and
generating, by the first image processing circuit (120), a fourth data packet comprising the other two of the color portions of the first color infrared image and the second color infrared image, the infrared portions of the first color infrared image and the second color infrared image, the first depth data (D1), and the second depth data (D2) different from the first data packet and the third data packet.

8. The system (100) of claim 7, **characterized in that**
the first image processing circuit (120) further provides a first transmission interface (TI1), and
the second image processing circuit (130) further provides a second transmission interface (TI2) connected with the first transmission interface (TI1), wherein
the first transmission interface (TI1) transmits the first data packet to the second transmission interface (TI2) over a third channel, transmits the third data packet to the second transmission interface (TI2) over a fourth channel, and transmits the fourth data packet to the second transmission interface (TI2) over a fifth channel,
the first data packet further comprises a third channel identifier merely corresponding to the third channel, the third data packet further comprises a fourth channel identifier merely corresponding to the fourth channel, and the fourth data packet further comprises a fifth channel identifier merely corresponding to the fifth channel, or the method of claim 7, **characterized in that** the step of receiving the first data packet comprises:
providing, by the first image processing circuit (120), a first transmission interface (TI1);
providing, by the second image processing circuit (130), a second transmission interface (TI2) connected with the first transmission interface (TI1);
transmitting, by the first transmission interface (TI1), the first data packet to the second transmission interface (TI2) over a third channel, wherein the first data packet further comprises a third channel identifier merely corresponding to the third channel;
transmitting, by the first transmission interface (TI1), the third data packet to the second transmission interface (TI2) over a fourth channel, wherein the third data packet further comprises a fourth channel identifier merely corresponding to the fourth channel; and
transmitting, by the first transmission interface (TI1), the fourth data packet to the second transmission interface (TI2) over a fifth channel, wherein the fourth data packet further comprises a fifth channel identifier merely corresponding to the fifth channel.

9. The system (100) of claim 8 or the method of claim 8, **characterized in that** the third channel is a physical channel (PCH), the fourth channel is a virtual channel (VCH1, VCH2), the fifth channel is another virtual channel (VCH1, VCH2), and the third channel, the fourth channel, and the fifth channel correspond to different memory blocks in the second transmission interface (TI2).

10. The system (100) of claim 1, **characterized by** further comprising:
a third image sensor, coupled to the first image processing circuit (120), and generating a third image, wherein the first image (M1, IR1, CIR1) is an infrared image, the second image (M2, IR2, CIR2) is another infrared image, the third image is a color image, and the first image processing circuit (120) is further configured to:
generate the depth data (D, D1, D2) corresponding to the at least one object identified in the first image (M1, C1, IR1, CIR1), the second image (M2, C2, IR2, CIR2), and the third image, or the method of claim 2, **characterized by** further comprising:
generating, by a third image sensor, a third image, wherein the first image (M1, IR1, CIR1) is an infrared image, the second image (M2, IR2, CIR2) is another infrared image, the third image is a color image, and the step of generating the depth data (D, D1, D2) comprises:
generating, by the first image processing circuit (120), the depth data (D, D1, D2) corresponding to the at least one object identified in the first image (M1, C1, IR1, CIR1), the second image (M2, C2, IR2, CIR2), and the third image.
